# EUROPEAN PATENT APPLICATION

(11) **EP 1 463 270 A2**
(43) Date of publication of application: **29.09.2004**
(21) Application number: 04251203.8
(22) Date of filing: 02.03.2004
(51) Int. Cl.: H04L 29/12

(54) **Apparatus and method for handling ARP (Address Resolution Protocol) requests**

(30) Priority: 03.03.2003 US 379400
(71) Applicant: Nokia Corporation, 02150 Espoo (FI)
(72) Inventor: Kondapalli, Raghu, San Jose, CA 95212 (US); Kulkarni, Umesh, Indiranagar Bangalore 560008 (IN)
(74) Representative: Style, Kelda Camilla Karen

(57) **Abstract**

An apparatus for performing an address resolution protocol (ARP) function on a packet includes a route lookup engine, a directly connected node data store, an indirectly connected node data store, and an ARP engine. The route lookup engine receives the packet from a network and generates a route index for the packet. The directly connected node data store stores media access control (MAC) addresses for directly connected nodes. The indirectly connected node data store stores indirectly connected node MAC addresses. The ARP engine generates an ARP entry for the packet based on the route index and searches the directly connected node data store and the indirectly connected node data store to determine if the ARP entry is resolved. If the ARP entry is unresolved, the ARP entry discards the packet, generates a new ARP entry, assists in resolving the new ARP entry, and locates a node on the network corresponding to the new ARP entry.

## Description

### Field of the Invention

The present invention relates to network routing, and more particularly to performing an address resolution protocol function.

### Background of the Invention

Routers forward packets from one network to another. Generally, a router receives the packet, inspects the intemet protocol (IP) address in the packet's header, and compares the address to the route information stored in the router's internal routing table in order to determine what to do with the packet. The packet is discarded if the router cannot determine what to do with the packet. Otherwise, the router forwards the packet toward its destination. As the packet is switched from router to router, its IP address remains the same, but its MAC address keeps changing to the next router interface along the path.

Any reconfiguration of the network triggers a learning operation in the router to locate changed nodes. For example, a learning operation is performed when the router detects a new device installed on the network. The learning operation involves sending out a broadcast message to adjacent routers identifying the position of the changed node. A change in the network configuration is detected when data from the new device is received by the router. The routing tables in the router are updated by software to effect the network changes.

In order to minimize traffic drops a router should be able to learn all network configuration changes as soon as possible. As the number of network reconfigurations increase, the router takes longer to detect the changes. The process of detecting and programming the network changes is slow, taking as long as several seconds. What is needed is a way to efficiently reflect the network changes.

### Summary of the Invention

Briefly stated, the present invention is directed to an efficient method of performing an address resolution protocol (ARP) function. The invention implements a scheme in both hardware and software that enables a router to perform the ARP resolution function at a rate that allows the router to quickly detect network reconfigurations.

One aspect of the invention is directed to a MAC address data store for directly connected hosts and a separate MAC address data store for indirectly connected hosts. The separate data stores result in faster router configuration updates and a decrease in customer traffic drops.

According to one aspect, the MAC address data store for directly connected nodes is accessed in hardware using a CAM memory.

According to another aspect, the MAC address data store for indirectly connected nodes is accessed in hardware using a RAM memory.

According to another aspect, unresolved MAC addresses are added to the CAM.

Another aspect of the invention is directed to an apparatus for performing an address resolution protocol (ARP) function on a packet. The apparatus includes a route lookup engine, a directly connected node data store, an indirectly connected node data store, and an ARP engine. The route lookup engine receives the packet from a network and generates a route index for the packet. The directly connected node data store stores media access control (MAC) addresses for directly connected nodes. The indirectly connected node data store stores indirectly connected node MAC addresses. The ARP engine generates an ARP entry for the packet based on the route index and searches the directly connected node data store and the indirectly connected node data store to determine if the ARP entry is resolved. If the ARP entry is unresolved, the ARP entry discards the packet, generates a new ARP entry, assists in resolving the new ARP entry, and locates a node on the network corresponding to the new ARP entry.

Another aspect of the invention is directed to a method for performing an ARP function on a packet received in an ARP engine coupled to a network. The packet is received and a corresponding ARP entry is generated. Directly and indirectly connected node data stores of MAC addresses are searched to determine if the ARP entry is resolved. When the ARP entry is not resolved the packet is discarded. A new ARP entry is generated and resolved. The destination node on the reconfigured network corresponding to the resolved ARP entry is then located.

### Brief Description of the Drawings

Non-limiting and non-exhaustive embodiments of the present invention are described with reference to the following drawings. In the drawings, like reference numerals refer to like parts throughout the various figures unless otherwise specified.
FIGURE 1 illustrates a block diagram generally showing an overview of one embodiment of a network system in which the invention can operate;
FIGURE 2 illustrates a functional block diagram of one embodiment of a general architecture of a router of the network system; and
FIGURE 3 illustrates a flow diagram generally showing one embodiment of a method for performing an address resolution protocol function, in accordance with aspects of the invention.

### Detailed Description of the Preferred Embodiment

In the following detailed description of exemplary embodiments of the invention, reference is made to the accompanied drawings, which form a part hereof, and which is shown by way of illustration, specific exemplary embodiments of which the invention may be practiced. Each embodiment is described in sufficient detail to enable those skilled in the art to practice the invention, and it is to be understood that other embodiments may be utilized, and other changes may be made, without departing from the spirit or scope of the present invention. The following detailed description is, therefore, not to be taken in a limiting sense, and the scope of the present invention is defined only by the appended claims.

Throughout the specification and claims, the following terms take the meanings explicitly associated herein, unless the context clearly dictates otherwise. The meaning of "a," "an," and "the" include plural references. The meaning of "in" includes "in" and "on." Additionally, a reference to the singular includes a reference to the plural unless otherwise stated or is inconsistent with the disclosure herein.

Briefly stated, the present invention is directed to an efficient method of performing an address resolution protocol (ARP) function. The invention implements a scheme in both hardware and software that enables a router to perform the ARP resolution function at a rate that allows the router to quickly detect changed network configurations. A MAC address data store for directly connected hosts and a separate MAC address data store for indirectly connected hosts results in faster network router configuration updates and a decrease in customer traffic drops. The MAC address data store for directly connected nodes is accessed in hardware using a CAM memory. Hardware of the router assists software to add unresolved MAC addresses to the CAM. The router determines the location of the next router that will receive the packet when the router performs the ARP function. The router accesses the MAC address of the next router once the location of the next router is determined.

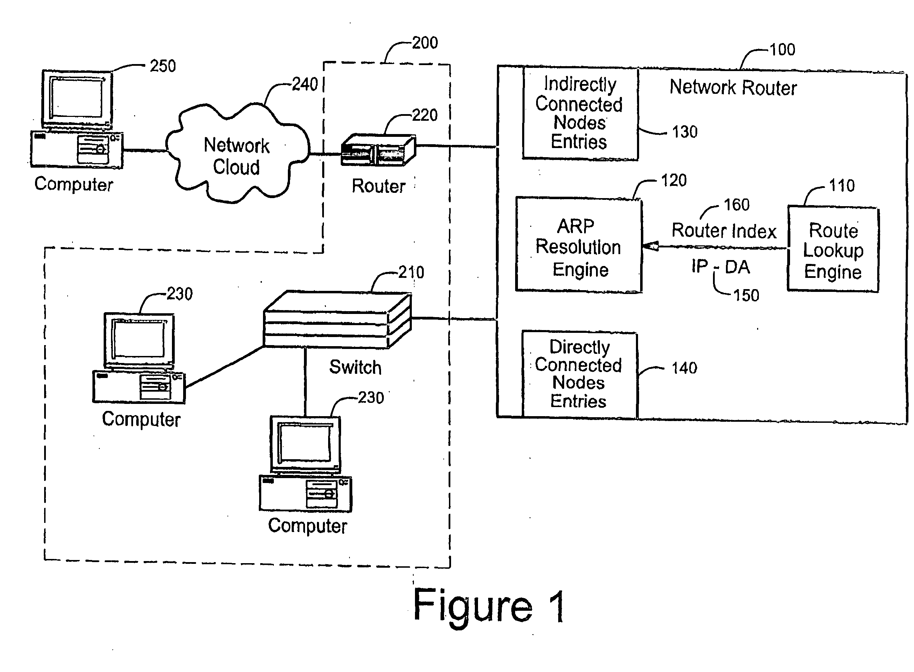

FIGURE 1 illustrates a block diagram generally showing an overview of one embodiment of a network system in which the present invention may operate. The network system includes router 100, network 200, network cloud 240, and computer host 250. Router 220 links to network cloud 240 which links to computer host 250. Computer host 250 is indirectly connected to router 100. Network 200 includes switch 210, router 220, and computer hosts 230. Switch 210 connects computer hosts 230 to router 100. Computer hosts 230 are directly connected to router 100.

Router 100 includes route lookup engine 110, address resolution protocol (ARP) engine 120, indirectly connected node data store 130, and directly connected node data store 140. Indirectly connected node data store 130 stores media access control (MAC) addresses for nodes indirectly connected to router 100 such as computer host 250. Directly connected node data store 140 stores MAC addresses for nodes directly connected to router 100 such as computer hosts 230.

An exemplary operation of the network system will now be described. Router 100 receives a packet from network 200. Route lookup engine 110 performs a route lookup operation on the packet to determine a corresponding IP destination address (IP-DA) (150). Route lookup engine 110 generates a route index (160) for the packet. ARP engine 120 receives the packet and generates an ARP entry based on route index 160.

IP destination address 150 of the destination node is resolved after performing the route lookup operation. The ARP entry of the packet is resolved after the ARP function is performed. Router 100 links to the destination node and transmits the packet after the appropriate MAC address of the node is obtained and the corresponding ARP entry is resolved.

Directly connected nodes are distinguished from indirectly connected nodes when performing the ARP function. ARP engine 120 performs a lookup operation in directly connected node data store 140 based on route index 160 and the IP destination address 150 fields of the packet to obtain the MAC address of the directly connected node. ARP engine 120 performs a lookup operation in indirectly connected node data store 130 based on the route index to obtain the MAC address for the indirectly connected node.

A data store of resolved MAC addresses is maintained in hardware of ARP engine 120. Some unresolved MAC addresses may not be available in the hardware. The hardware of-ARP engine 120 interacts with software to add unresolved MAC addresses to a content accessible memory (CAM). The software accesses the unresolved MAC address and resolves the corresponding ARP entry.

For both directly and indirectly connected nodes, the unresolved ARP entries are passed from the hardware to the software by adopting any of the four following schemes: 1) The hardware stores the appropriate fields of the packet needed by the software to resolve the ARP entry; 2) The hardware generates a packet with the appropriate fields included and sends the packet to the software; 3) The hardware sends all unresolved ARP packets to the software; and 4) The hardware generates an ARP message and sends the message to other nodes of the network.

When the network undergoes a reconfiguration, the hardware discards the data traffic received until the ARP entry is resolved. According to one embodiment of the invention, the ARP function may take between a few microseconds to a few milliseconds to become resolved depending on which of the above four schemes is adopted.

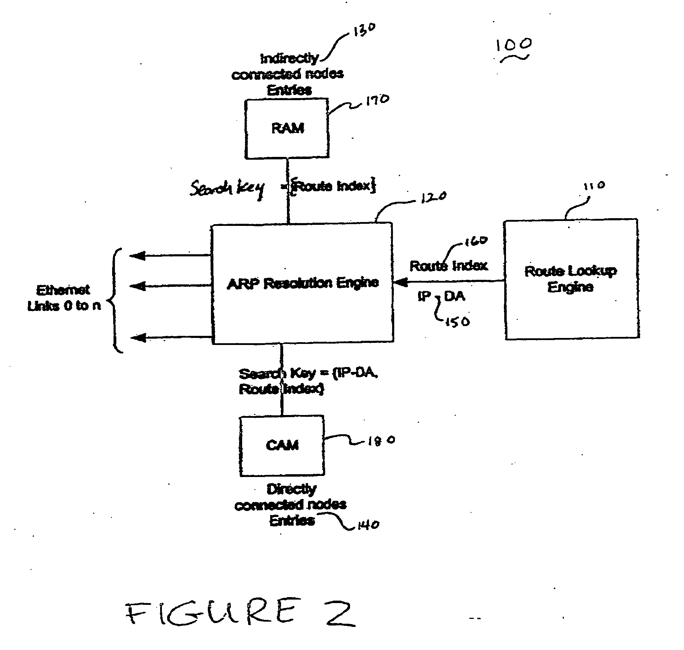

FIGURE 2 illustrates router 100 as shown in FIGURE 1 with the addition of random access memory (RAM) 170 and content accessible memory (CAM) 180. As shown in the figure, router 100 includes indirectly connected node data store 130 that is stored in RAM 170. The MAC address of an indirectly connected node is searched in RAM 170 using corresponding route index 160 as a search key. Directly connected node data store 140 is stored in CAM 180. CAM 180 is a searchable memory that receives data about IP destination address 150 and produces the corresponding MAC address. A search operation is performed in CAM 180 using IP destination address 150 as a search key to determine if the ARP entry of the packet has been resolved.

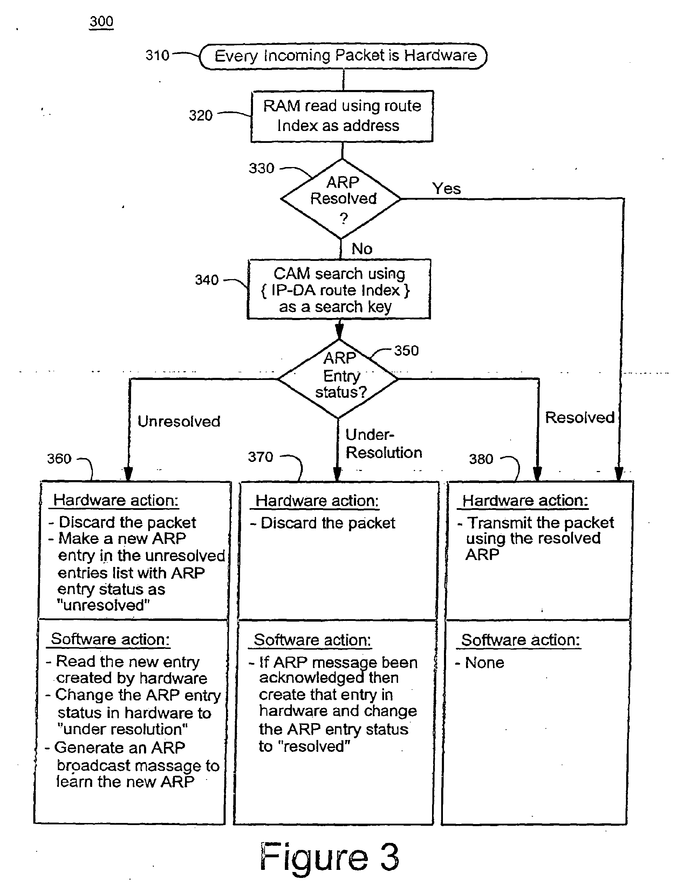

FIGURE 3 illustrates a process flow for the hardware and software when the hardware is implemented to create a new ARP entry each time an unresolved ARP entry is encountered.

At block 310, a packet is received. At block 320, the MAC address of the packet is searched in RAM using the route index as a search key. At decision block 330, the MAC address is checked to determine if the ARP entry is resolved. When the MAC address is resolved, the hardware transmits the packet and the process proceeds to block 380. When the MAC address is not resolved, the process proceeds to block 340. At block 340, the MAC address of the packet is searched in the CAM using the IP destination address and the route index of the packet as a search key. According to one embodiment, the CAM is split into a first-in-first-out (FIFO) buffer and a non-FIFO buffer. The FIFO buffer includes a list of unresolved ARP entries. The non-FIFO buffer includes a list of resolved ARP entries. At decision block 350, the status of the ARP entry is determined.

An unresolved ARP entry proceeds to block 360. The ARP field of the packet indicates that the packet is an unresolved ARP entry. At block 360, the hardware discards the packet and creates a new ARP entry corresponding to the route index of the discarded packet. The new ARP entry is added to the unresolved ARP entry list of the FIFO buffer. The software reads the new unresolved ARP entry and assists in resolving the ARP entry. The resolved ARP entry is added to the FIFO buffer. The software programs the resolved ARP entry in routing tables of the CAM. The software changes the ARP entry status in hardware to "under resolution." The software generates a message and sends the message to other nodes on the network to locate a node on the reconfigured network corresponding to the new ARP entry. The hardware removes the resolved ARP entry from the FIFO buffer and adds the resolved ARP entry to the non-FIFO buffer. The non-FIFO buffer is comprised of ARP entries that are resolved and programmed in software.

An ARP entry that is under resolution, i.e., the software is currently handling the ARP entry, proceeds to block 370. An ARP entry that is under resolution has been sent to the FIFO buffer by the hardware but has not yet been resolved. The hardware discards the packet of the ARP entry under resolution and sends a new packet to the appropriate node. The software determines if the new packet has been acknowledged. If so, the software creates a new ARP entry in hardware and changes the ARP entry status to "resolved."

A resolved ARP entry proceeds to block 380. The hardware transmits the packet having a resolved ARP entry to the appropriate node. The software takes no action.

It will be understood that each block of the flowchart illustration, and combinations of blocks in the flowchart illustration, can be implemented by computer program instructions. These program instructions may be provided to a processor to produce a machine, such that the instructions, which execute on the processor, create means for implementing the actions specified in the flowchart block or blocks. The computer program instructions may be executed by a processor to cause a series of operational steps to be performed by the processor to produce a computer implemented process such that the instructions, which execute on the processor provide steps for implementing the actions specified in the flowchart block or blocks.

Accordingly, blocks of the flowchart illustration support combisations of means for performing the specified actions, combinations of steps for performing the specified actions and program instruction means for performing the specified actions. It will also be understood that each block of the flowchart illustration, and combinations of blocks in the flowchart illustration, can be implemented by special purpose hardware-based systems which perform the specified actions or steps, or combinations of special purpose hardware and computer instructions.

The above specification, examples, and data provide a complete description of the manufacture and use of the composition of the invention. Since many embodiments of the invention can be made without departing from the spirit and scope of the invention, the invention resides in the claims hereinafter appended.

## Claims

1. An apparatus for performing an address resolution protocol (ARP) function on a packet, comprising:
a route lookup engine that is arranged to receive the packet from a network and generate a route index for the packet;
a directly connected node data store arranged to store media access control (MAC) addresses for directly connected nodes;
an indirectly connected node data store arranged to store indirectly connected node MAC addresses; and
an ARP engine that is coupled to the route lookup engine, the directly connected node data store and the indirectly connected node data store and is configured to perform the following actions:
generate an ARP entry for the packet based on the route index;
search the directly connected node data store and the indirectly connected node data store to determine if the ARP entry is resolved;
determine if the ARP entry is unresolved based on the search of the directly connected node data store and the indirectly connected node data store, and when the ARP is not resolved:
discard the packet;
generate a new ARP entry;
assist in resolving the new ARP entry; and
locate a node on the network corresponding to the new APR entry.

2. The apparatus of claim 1, wherein the packet is discarded and a new ARP entry is generated in hardware of the ARP engine.

3. The apparatus of claim 1 or 2, wherein the new ARP entry is resolved and the node on the network corresponding to the new ARP entry is located in software of the ARP engine.

4. The apparatus of any preceding claim, wherein the ARP engine generates the new ARP entry for the discarded packet based on the route index of the discarded packet.

5. The apparatus of any preceding claim, wherein locating the node on the network corresponding to the new ARP entry further comprises sending a message to other nodes of the network.

6. The apparatus of any preceding claim, wherein the ARP engine searches the directly connected node data store using the route index and an internet protocol (IP) destination address of the packet as a search key.

7. The apparatus of any preceding claim, wherein the ARP engine searches the indirectly connected node data store using the route index of the packet as a search key.

8. The apparatus of any preceding claim, wherein the directly connected node data store is stored in content accessible memory.

9. The apparatus of any preceding claim, wherein the indirectly connected node data store is stored in random access memory.

10. A method for performing an ARP function on a packet received in an ARP engine coupled to a network, comprises:
receiving the packet;
generating an ARP entry of the packet; determining when the ARP entry is resolved by searching a directly connected node data store of MAC addresses and an indirectly connected node data store of MAC addresses, and when the ARP entry is not resolved:
discarding the packet;
generating a new ARP entry;
assisting in resolving the new ARP entry; and locating a node on the network corresponding to the new ARP entry.

11. The method of claim 10, wherein the new ARP entry is generated based on the route index of the discarded packet.

12. The method of claim 10 or 11, wherein locating the node on the network further comprises sending a message to other nodes of the network.

13. The method of any of claims 10 to 12 wherein the directly connected node data store is searched using a route index and an internet protocol (IP) destination address of the packet as a search key.

14. The method of any of claims 10 to 13, wherein the indirectly connected node data store is searched using a route index of the packet as a search key.

15. The method of any of claims 10 to 14, wherein the directly connected node data store is stored in content accessible memory.

16. The method of any of claims 10 to 15, wherein the indirectly connected node data store is stored in random access memory.

17. An apparatus for performing an ARP function on a packet received in an ARP engine coupled to a network, comprises:
means for receiving the packet;
means for generating an ARP entry of the packet;
means for determining when the ARP entry is resolved by searching a directly connected node data store of MAC addresses and an indirectly connected node data store of MAC addresses, and when the ARP entry is not resolved:
means for discarding the packet;
means for generating a new ARP entry;
means for assisting in resolving the new ARP entry; and
means for locating a node on the network corresponding to the new ARP entry.
